(19) Europäisches Patentamt
European Patent Office
Office européen des brevets

(11) Veröffentlichungsnummer: **0 255 854 B1**

# (12) EUROPÄISCHE PATENTSCHRIFT

(45) Veröffentlichungstag der Patentschrift: **07.10.92**

(51) Int. Cl.$^5$: **C08F 8/00**, C08F 8/32, C08F 8/44

(21) Anmeldenummer: **87106169.3**

(22) Anmeldetag: **28.04.87**

## (54) Verfahren zur Herstellung kationisierter Polyvinylalkohole.

(30) Priorität: **07.08.86 DE 3626662**

(43) Veröffentlichungstag der Anmeldung:
**17.02.88 Patentblatt 88/07**

(45) Bekanntmachung des Hinweises auf die Patenterteilung:
**07.10.92 Patentblatt 92/41**

(84) Benannte Vertragsstaaten:
**AT DE ES FR GB IT NL SE**

(56) Entgegenhaltungen:
**EP-A- 0 141 269**
**US-A- 3 685 953**
**US-A- 4 127 563**
**US-A- 4 281 109**

**CHEMICAL ABSTRACTS, Band 86, Nr. 20, 16. Mai 1977, Seite 57, Zusammenfassung Nr. 141243u, Columbus, Ohio, US**

(73) Patentinhaber: **Degussa Aktiengesellschaft**
**Weissfrauenstrasse 9**
**W-6000 Frankturt am Main 1(DE)**

(72) Erfinder: **Stober, Reinhard, Dr.**
**Bornwiesenweg 22**
**W-6467 Hasselroth 2(DE)**
Erfinder: **Kohn, Ellen**
**Bannweideweg 40**
**W-7528 Karlsdorf-Neuthard(DE)**
Erfinder: **Bischoff, Dietmar**
**Kälberauer Strasse 6**
**W-8755 Alzenau-Michelbach(DE)**

**EP 0 255 854 B1**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft ein Verfahren zur Herstellung kationisierter Polyvinylalkohole (PVA) durch Umsetzung von PVA mit Alkylidenepoxiden.

Aus der EP-A-0 141 269 ist ein Verfahren zur Verätherung von Polyvinylalkoholen (PVA) durch Umsetzung von Alkylidenepoxiden mit PVA in alkalischem Medium in Gegenwart von Wasser bekannt. Die modifizierten PVA finden in kosmetischen Formulierungen Verwendung.

Aus der JP-OS 77/03 689 (C.A. 86: 14 1243n) ist ein Umsetzung dieser Art bekannt, bei der man PVA in wässiger Natronlauge digeriert, anschließend die überschüssige Lauge abfiltriert und den erhaltenen feuchten Filterkuchen mit 2,3-Epoxypropyltrimethylammoniumchlorid unter mehrstündigem Durchmischen reagieren läßt.

Der erhebliche Alkaliüberschuß im Reaktionsprodukt muß mit Essigsäure neutralisiert, das so erhaltene Zwischenprodukt anschließend mit Methanol gewaschen und getrocknet werden.

Die kationisierten Polyvinylalkohole finden Verwendung in der Papierherstellung z. B. zur Verbesserung des Retentionsverhaltens und führen auch zu einer Verbesserung der Festigkeitseigenschaften des fertigen Papiers.

Aufgabe der Erfindung ist ein Verfahren zur Herstellung von kationisierten Polyvinylalkoholen, das ohne Zwischenschritte direkt zum Endprodukt führt.

Es wurde nun ein Verfahren zur Verätherung von Polyvinylalkoholen (PVA) gefunden, bei dem man PVA mit Alkylidenepoxiden der allgemeinen Formeln

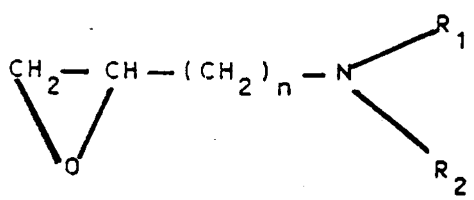

(I)

oder

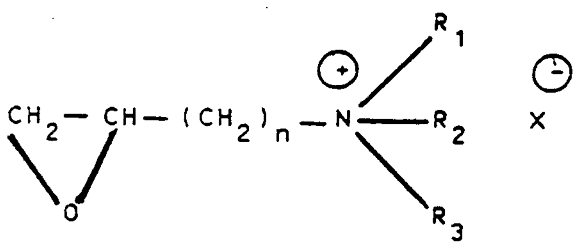

(II)

in denen n = 1, 2 oder 3 ist, $R_1$, $R_2$ und $R_3$ gleiche oder verschiedne Alkylreste mit 1 bis 18 Kohlenstoffatomen oder $R_1$ dem Benzylrest oder $-C_2H_4OH$ entspricht, und $X^-$Chlorid, Bromid, Sulfat oder Acetat bedeuten, oder deren Gemischen mit PVA in alkalischem Medium in Gegenwart von Wasser umsetzt. Das Verfahren ist dadurch gekennzeichnet, daß die Reaktionsmischung 11 bis 30 Gew.-% Wasser, bezogen auf deren Gesamtmenge, und 1 bis 4 Gew.% eines Alkali- oder Erdalkalihydroxids, bezogen auf die PVA-Menge, enthält.

Der Bereich Reaktionstemperatur reicht von 5 bis 75 °C, insbesondere von 15 bis 45 °C.

In einer bevorzugten Ausführungsform geht man dabei so vor, daß man die Mischung aus PVA, Alkali- oder Erdalkalihydroxid bzw. Erdalkalioxid, Alkylidenepoxid und Wasser in einem Intensivmischer innerhalb von 10 Sekunden bis 25 Minuten, bevorzugt 20 Sekunden bis 5 Minuten, homogenisiert, anschließend das Gemisch ausschleust und die Kationisierungsreaktion bis zum Ende ablaufen läßt.

Weitere Mischenergien und zusätzliche Verfahrensschritte sind dann nicht mehr erforderlich.

Wünscht man eine schnelle Umsetzung, werden der Mischer und der Behälter, in dem die Restreaktion stattfindet, auf die oben angegebenen Temperaturen bis 75 °C aufgeheizt.

Es ist aber ebenso möglich, nur den Mischer zu beheizen, und die Restreaktion ohne weiteren Heizaufwand bei Raumtemperatur (20 bis 25 °C) ablaufen zu lassen oder umgekehrt.

Bevorzugt arbeitet man bei der Temperatur, die sich ohne äußere Wärmezufuhr im Mischer einstellt (18 bis 30 °C, bevorzugt 20 - 25 °C), füllt nach der Homogenisierung der Mischung gleich in einen für den Versand vorgesehenen Behälter oder ein Silo ab, und läßt die Kationisierungsreaktion bei der sich dann in Abhängigkeit von der Umgebungstemperatur oder Raumtemperatur einstellenden Temperatur bis zum Ende ablaufen.

Diese liegt in Abhängigkeit von z. B. jahreszeitlich bedingten Schwankungen bei 18 bis 30 °C, insbesondere bei 20 bis 25 °C.

Die geringe Verweilzeit im Mischaggregat ermöglicht dadurch auch eine kontinuierliche Durchführung der Trockenkationisierung.

Als Intensivmischer geeignet sind z. B. Pflugscharmischer kontinuierlich und diskontinuierlich) und Befeuchtungs-Durchflußmischer (kontinuierlich).

Die Reihenfolge des Reagentienzusatzes zum vorgelegten PVA ist für den Erfolg nicht ausschlaggebend. Im allgemeinen geht man so vor, daß das alkalisch wirkende Hydroxid oder Oxid in wässriger Lösung bzw. als wässrige Suspension oder als Feststoff bei laufendem Mischer auf das vorgelegte PVA getropft oder bevorzugt innerhalb von 10 sec. bis 5 min gesprüht wird, anschließend das Kationierungsmittel und gegebenenfalls auch noch Wasser bevorzugt aufgesprüht werden.
Die oben angegebene Zeit für die Homogenisierung beginnt mit der Zudosierung des Kationisierungsmittels. Man kann aber auch alle Komponenten gleichzeitig dem PVA zusetzen.

Erfindungsgemäß erfolgt die Verätherung des PVA mit Alkylidenepoxiden oder Gemischen dieser Epoxide der allgemeinen Formel

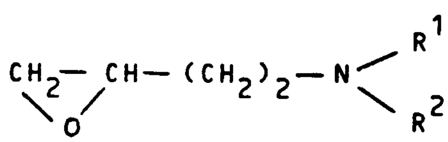

(I)

oder vorzugsweise

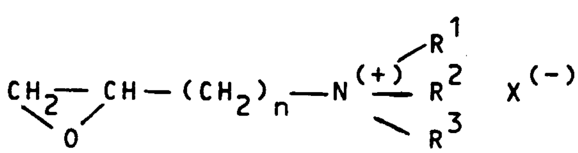

(II)

in der n eine Zahl von 1 bis 3 ist und $R^1$, $R^2$ und $R^3$ gleiche oder verschiedene Alkylreste mit 1 bis 18 Kohlenstoffatomen oder $R^1$ = Benzyl oder $C_2H_4OH$ und $X^{(-)}$ = Chlorid, Bromid, Sulfat oder Acetat bedeuten, insbesondere aber Chlorid.

Anstelle der Alkylidenepoxide können auch die entsprechenden Chlorhydrine eingesetzt werden, wobei dann spätestens im Reaktionsmedium die Umwandlung zu den Epoxiden entsprechend den Formeln (I) und (II), die mit dem PVA reagieren erfolgt.
Hierbei muß allerdings zusätzlich zur katalytischen Menge Alkali noch die stöchiometrische Menge Alkali zur Umwandlung der Chlorhydrine in die Epoxide eingesetzt werden.

Als Ausgangssubstanzen geeignet sind Polyvinylalkohle mit hoher Verseifungszahl, bevorzugt zu 99 % hydrolysierte Polyvinylalkohole, mit einem Polymerisationsgrad, bevorzugt von ca. 2000 bis 2400. PVA kann sowohl als Granulat wie auch in Pulverform eingesetzt werden.
Besonders geeignet sind Polyvinylalkohole, die in Form von Pulvern vorliegen.
Das PVA bleibt rieselfähig und muß auch nach der Reaktion nicht mehr getrocknet werden.

Eine Neutralisation des Endprodukts ist ebenfalls nicht erforderlich.

Man setzt pro Hydroxylgruppe im Polyvinylalkohol 0,005 bis 1 Mol Epoxid gemäß den Formeln (I) oder (II), vorzugsweise 0,05 bis 0,2 Mol Epoxid, ein. Daraus resuliert ein Substitutionsgrad (DS) von 0,005 bis 1, bzw. von 0,05 bis 0,2.

Erfindungsgemäß wird die Verätherung vonPVA mit den Alkylidenepoxiden in einem Medium vorgenommen, das 11 bis 30 Gew.-%, insbesondere 12 bis 20 Gew. %, Wasser, bezogen auf die Gesamtmenge der Reaktionsmischung, und 1 bis 4 Gew.-%, insbesondere 2,5 bis 3,1 Gew.-%, eines Alkali- oder Erdalkalihydroxids bzw. -oxids, bezogen auf die Menge PVA, insbesondere Natriumhydroxid enthält.
Der günstigste Wert der Natriumhydroxidkonzentration liegt zwischen 2,9 und 3,1 Gew.-%, insbesondere bei 3,0 Gew.-%.

Die alkalisch wirkenden Hydroxide bzw. Oxide werden in Form wässriger Lösungen, Suspensionen oder als Feststoff eingesetzt.

Deren Wassergehalt stimmt man so ab, daß die für die Umsetzung notwendige Mindestmenge an Wasser in Höhe von 11 Gew.-% erreicht bzw. überschritten wird, natürlich unter Berücksichtigung der durch die Epoxidlösung eingebrachten Wassermengen.

Neben diesen an sich bekannten Komponenten, sind in einer Verfahrensvariante 0,02 bis 2,0 Gew.-%, bevorzugt 0,2 bis 1,0 Gew.-%, einer feinteiligen Kieselsäure in dem Reaktionsgemisch vorhanden, bezogen auf dessen Gesamtmenge.

Dabei kann es sich um gefällte oder durch Flammenhydrolyse erzeugte Kieselsäuren handeln, hydrophil oder hydrophob.

Die spezifischen Oberflächen liegen zwischen 60 und 700 $m^2/g$, bevorzugt 100 und 450 $m^2/g$ (BET-Messung nach DIN 66 131, $N_2$-Adsorption bei der Temperatur des flüssigen Stickstoffs, vorheriges Ausheizen der Probe bei 110 °C).

Bevorzugt eingesetzt werden hydrophile gefällte Kieselsäuren mit einer spezifischen Oberfläche von 190 bis 450 $m^2/g$, insbesondere eine sprühgetrocknete gefällte Kieselsäure mit einer spezifischen Oberfläche von 190 $m^2/g$ (BET-Messung).

Man verwendet auch Gemische aus hydrophoben und hydrophilen Kieselsäuren.

Beispiele

Beispiel 1

In einem 4 l Pflugscharmischer werden zunächst 10 mol PVA-Granulat (Mowiol ®28-99) vorgelegt. Bei laufendem Mischer (3000 U/min) werden innerhalb 5 min. 3 % NaOH (bezogen auf Trockensubstanz PVA) als 30 %-ige Lösung aufgetropft. Nach weiteren 5 min. werden 0,2 mol 2,3-Epoxypropyltrimethylammoniumchlorid (Aktivgehalt 71, 15 %) und die erforderliche Menge Wasser zugegeben und weitere 10 min. gemischt. Die Wassermenge ist so zu berechnen, daß sich der in Tabelle 1 bzw. Tabelle 2 angegebene Wassergehalt einstellt.

Danach wird die Reaktionsgemisch in Plastikbeutel abgefüllt, vakuumdicht verschweißt und anschließend bei der gewünschten Reaktionstemperatur gelagert.

Ergebnisse siehe Tabelle 1 und 2.

Tabelle 1: Trockenkationisierung von PVA (Mowiol(R) 28 - 99 : Viskosität (DIN 53015): 28 ± 2 mPa . s
Verseifungsgrad 99.4 Mol-%

| Versuchs-Nr. | $DS_{theo.}$ | Wassergehalt [%] | Katalysator | Temperatur [° C] | Zeit [h] | % Stickstoff | $DS_{prakt.}$ | Ausbeute [%] |
|---|---|---|---|---|---|---|---|---|
| 1 | 0,02 | 33,7 | 3 % NaOH | 45° | 7<br>30 | 0,2146<br>0,2519 | 0,0069<br>0,0081 | 34,6<br>40,7 |
| 2 | 0,02 | 22,6 | 3 % NaOH | 45 | 7<br>30 | 0,2519<br>0,2711 | 0,0081<br>0,0088 | 40,7<br>43,9 |
| 3 | 0,02 | 17,4 | 3 % NaOH | 45 | 7<br>30 | 0,2658<br>0,2818 | 0,0086<br>0,0091 | 43,1<br>45,7 |
| 4 | 0,02 | 17,4 | 3 % NaOH | 25 | 48<br>72<br>168 | 0,1499<br>0,1881<br>0,2719 | 0,0048<br>0,0060<br>0,0088 | 23,0<br>30,2<br>44,1 |
| 5 | 0,02 | 17,4 | 3 % NaOH | 75 | 4 | 0,2652 | 0,0086 | 42,9 |

Tabelle 2: Trockenkationisierung von PVA (Mowiol(R) 28 - 99)

| Versuchs-Nr. | $DS_{theo.}$ | Wassergehalt [%] | Katalysator | Temperatur [°C] | Zeit [h] | % Stickstoff | $DS_{prakt.}$ | Ausbeute |
|---|---|---|---|---|---|---|---|---|
| 6 | 0,02 | 17,4 | 4 % NaOH | 25 | 48 | 0,1398 | 0,0045 | 22,3 |
| | | | | | 168 | 0,2500 | 0,0081 | 40,4 |
| 7 | 0,02 | 17,4 | 4 % NaOH | 45 | 4 | 0,1826 | 0,0059 | 29,0 |
| | | | | | 24 | 0,2511 | 0,0081 | 40,6 |
| 8 | 0,02 | 17,4 | 4 % NaOH | 75 | 1 | 0,2511 | 0,0081 | 40,6 |
| 9 | 0,02 | 17,4 | 2 % NaOH | 25 | 48 | 0,1420 | 0,0045 | 22,7 |
| | | | | | 168 | 0,2218 | 0,0072 | 35,8 |
| 10 | 0,02 | 17,4 | 2 % NaOH | 45 | 4 | 0,2146 | 0,0069 | 34,5 |
| | | | | | 24 | 0,2270 | 0,0073 | 36,6 |
| 11 | 0,02 | 17,4 | 2 % NaOH | 75 | 1 | 0,2136 | 0,0069 | 34,5 |
| | | | | | 4 | 0,2198 | 0,0071 | 35,4 |

Beispiel 2

Analog Beispiel 1 werden anstelle von Mowiol®28-99 10 mol Elvanol ®71-30 eingesetzt. Die Ergebnisse sind in Tabelle 3 ersichtlich. Bei Versuchs-Nummer 15 bis 19 wurden 0,6 mol und bei der Nummer 20 1,0

mol 2,3-Epoxytrimethylammoniumchlorid eingesetzt.

Beispiel 3

Analog Beispiel 2 werden vor Zugabe von NaOH bzw. $Ca(OH)_2$ 0,75 % (bezogen auf PVA) einer feinteiligen Kieselsäure zugesetzt.

Die Epoxid-Menge wurde entsprechend den verschiedenen DS-Werten gewählt.

Bei Versuchs-Nummer 23 bis 28 wurde $Ca(OH)_2$ anstelle von NaOH als Katalysator verwendet.

Die Ergebnisse sind in Tabelle 4 dargestellt.

Tabelle 3:

Trockenkationisierung von PVA (Elvanol(R) 71 - 30: Viskosität 27 -33 mPa.s (4 % wässrige Lösung, 20 °C)
Verseifungsgrad: 99.0-99.8

| Versuchs-Nr. | $DS_{theo.}$ | Wassergehalt [%] | Katalysator | Temperatur [°C] | Zeit [h] | % Stickstoff | $DS_{prakt.}$ | Ausbeute |
|---|---|---|---|---|---|---|---|---|
| 12 | 0,02 | 17,4 | 3 % NaOH | 25 | 48 | 0,0799 | 0,0025 | 12,7 |
| | | | | | 96 | 0,2891 | 0,0094 | 47,0 |
| 13 | 0,02 | 17,4 | 3 % NaOH | 45 | 7 | 0,2811 | 0,0091 | 45,9 |
| | | | | | 24 | 0,2875 | 0,0093 | 46,6 |
| 14 | 0,02 | 17,4 | 3 % NaOH | 75 | 1 | 0,2766 | 0,090 | 44,9 |
| | | | | | 4 | 0,2748 | 0,0089 | 44,5 |
| 15 | 0,06 | 12,0 | 3 % NaOH | 25 | 48 | 0,4713 | 0,0156 | 26,1 |
| | | | | | 96 | 0,5410 | 0,0181 | 30,1 |
| | | | | | 168 | 0,5701 | 0,0191 | 31,9 |
| 16 | 0,06 | 12,0 | 3 % NaOH | 45 | 7 | 0,5879 | 0,0198 | 32,9 |
| | | | | | 24 | 0,5955 | 0,0200 | 33,4 |
| 17 | 0,06 | 12,0 | 3 % NaOH | 75 | 1 | 0,4850 | 0,0161 | 26,8 |
| | | | | | 4 | 0,4898 | 0,0163 | 27,1 |
| 18 | 0,06 | 24,5 | 3 % NaOH | 25 | 48 | 0,4342 | 0,0143 | 23,9 |
| | | | | | 96 | 0,5212 | 0,0174 | 29,0 |
| | | | | | 168 | 0,5380 | 0,0180 | 30,0 |
| 19 | 0,06 | 24,5 | 3 % NaOH | 45 | 7 | 0,5697 | 0,0191 | 31,8 |
| | | | | | 24 | 0,5712 | 0,0192 | 31,9 |
| 20 | 0,1 | 17,4 | 3 % NaOH | 75 | 1 | 0,6989 | 0,0238 | 23,8 |

Tabelle 4: Trockenkationisierung von PVA (Elvanol(R) 71-30) in Gegenwart von 0,75 % Kieselsäure (sprühgetrocknet, hydrophil, 190 $m^2/g$)

| Versuchs-Nr. | $DS_{theo.}$ | Wassergehalt [%] | Katalysator | Temperatur [°C] | Zeit [h] | % Stickstoff | $DS_{prakt.}$ | Ausbeute |
|---|---|---|---|---|---|---|---|---|
| 21 | 0,04 | 17,6 | 3 % NaOH | 25 | 168 | 0,6445 | 0,0218 | 54,4 |
| 22 | 0,1 | 12,0 | 3 % NaOH | 25 | 168 | 1,8379 | 0,0722 | 72,2 |
| 23 | 0,02 | 18,7 | 2 % $Ca(OH)_2$ | 25 | 168 | 0,1929 | 0,0062 | 31,2 |
| 24 | 0,02 | 18,7 | 2 % $Ca(OH)_2$ | 25 | 168 | 0,2051 | 0,0066 | 32,8 |
| 25 | 0,02 | 18,7 | 2 % $Ca(OH)_2$ | 25 | 168 | 0,2021 | 0,0065 | 32,3 |
| 26 | 0,04 | 16,8 | 4 % $Ca(OH)_2$ | 25 | 168 | 0,3457 | 0,0113 | 28,2 |
| 27 | 0,04 | 16,8 | 4 % $Ca(OH)_2$ | 25 | 168 | 0,3545 | 0,0116 | 29,0 |
| 28 | 0,04 | 16,8 | 4 % $Ca(OH)_2$ | 25 | 168 | 0,3533 | 0,0116 | 28,9 |

Analytik

Jeweils ca. 20 g der Reaktionsproben werden pro Analyse entnommen und in 200 g eines Aceton/Wasser-Gemisches (4:1) dispergiert, mit 10 %-iger Salzsäure von pH 14 auf pH 4 eingestellt und

abfiltriert. Nach zweimaligem Auswaschen mit jeweils 200 g Aceton/Wasser wird scharf abgesaugt und der Filterkuchen bei 75 °C 4 Stunden getrocknet. Anschließend wird der Umsetzungsgrad über eine Stickstoffbestimmung nach Kjeldahl ermittelt.

Die Ausbeute kann als Verhältnis von gefundenem Stickstoffgehalt zu theoretischem Stickstoffgehalt angegeben werden. Dabei muß beachtet werden, daß der nicht kationisierte Polyvinylalkohol eventuell einen Grundstickstoffgehalt besitzt, der von dem gefundenem Stickstoffgehalt subtrahiert werden muß.

$$\%\ Ausbeute = \frac{(\%N_{gef.} - \%N_o)}{\%\ N_{th.}} \times 100$$

$\%N_{gef.}$ = gefundener Stickstoffgehalt
$\%N_{th.}$ = theoretisch errechneter Stickstoffgehalt
$\%N_o$ = Grundstickstoffgehalt des Polyvinylalkohols

$$\%N_{gef.} = \frac{V \times 0{,}14}{E}$$

V = Verbrauch an HCl-Lösung bei der Titration zu Stickstoffbestimmung nach Kjeldahl (in ml)
E = Einwaage des kationischen PVA's (trocken)(in g)

$$\%N_{th.} = \frac{m_{Nt}}{m_{kat.PVA}} \times 100$$

$m_{Nt}$ = berechnete Masse Stickstoff für einen best. theor. DS
$m_{kat.PVA}$ = berechnete Masse des Reaktionsprodukte für einen best. theor. DS

Eine weitere Möglichkeit besteht darin, die Ausbeute als Verhältnis aus praktischem und theoretischem Substitutionsgrad anzugeben:

$$\%\ Ausbeute = \frac{praktischer\ DS}{theoretischer\ DS} \times 100$$

Berechnung des praktischen DS:

$$prakt.\ DS = \frac{(\%N_{gef.} - \%N_o) \times 44{,}o5\ g/mol}{(14\ g/mol \times 100) - (\%N_{gef.} - \%N_o) \times 151{,}64\ g/mol}$$

44,o5 g/mol = Molekulargewichtseinheit des PVA
151,64 g/mol = Molekulargewicht des Kationierungsreagenzes ("QUAB® 151") (2,3-Epoxypropyltrimethylammoniumchlorid)
%N × 151,64 g/mol = Korrekturfaktor für das Anwachsen der Molekularmasse jeder substituierten PVA-Molekulareinheit
$\%N_o$ = Grundstickstoffgehalt des PVA's

Berechnung des theoretischen DS:

$$\text{theor. DS} = \frac{n_{QUAB^{®}151}}{n_{PVA}}$$

$n_{QUAB\ 151}$ = Molmenge eingesetzten Kationisierungsreagenzes QUAB 151

$n_{PVA}$ = Molmenge trockenen Polyvinylalkohols

Die nach beiden Rechenmethoden erhaltenen Ergebnisse unterscheiden sich, da die Beziehung zwischen Substitutionsgrad und Stickstoffgehalt des kationischen Polyvinylalkohols nicht linear ist.

Einsatz von erfindungsgemäß kationisiertem PVA beim Papierherstellungsprozeß

Zur Herstellung einer Papiermasse stehen folgende Rohstoffe zur Verfügung:

- Zellstoff (36,37 %ig, Rest Wasser) folgender Qualität: 50 % Buchensulfit, 40 % Fichtensulfat und 10 % Fichtensulfit. Der Mahlgrad beträgt 21 ° SR
- Standard China Clay (dealuminiertes Kaolin)
- Hilfsstoffe: Alaun, Polyethylenimin, Polyvinylalkohol und kationisierter Polyvinylalkohol

Aus den genannten Rohstoffen wir eine ca. 3 %ige Suspension hergestellt:
Hierzu werden 68,74 g Zellstoff (= 25 g trocknerer Zellstoff), der bereits mit 1,5 l Wasser in einem Spezialaufschlaggerat für 3 Minuten aufgelockert wurde, mit weiteren 3 l Wasser im Mischbehälter vermengt. Als nächstes werden 5 g China Clay, in ca. 200 ml Wasser dispergiert, zugesetzt. Dies entspricht einem Füllstoffanteil von ca. 20 %, bezogen auf die Papierfeststoffmasse Als nächstes werden 9 g eines 10 %igen Alaun zugesetzt. Hierdurch entsteht ein leicht saures Stoffgemisch (Wochenblatt für Papierfabrikation 10 (1978), Seiten 355 - 358). Je nach berechneter Zusatzmenge werden zwischen 0,5 und 1 % PVA-Kleister (o,4 % im Wasser), bezogen auf den Füll- und Zellstoffanteil zugegeben. Das Stoffgemisch wird auf 10 l mit Wasser aufgefüllt und durch einen Rührer bei konstanter Drehzahl in Schwebe gehalten. Um Papierblätter mit einem Flächengewicht von 70 - 80 g/m$^2$ zu bilden, werden 810 ml Stoffgemisch aus dem Mischbehälter in den Standzylinder abgelassen und 0,5 g Polyethyleniminlösung (1 %ig) als Entwässerungsbeschleuniger zugesetzt. Insgesamt wurden 6 dieser Zellstoffbreiabmischungen vorgenommen, die sich lediglich in Art und Menge des zugesetzten Leimstoffes PVA/erfindungsgemäß hergestellter kationische PVA unterschieden:

Abmischung 1: 37,5 g PVA = 0,5 % vom Masseeintrag.
Abmischung 2: 75,0 g PVA = 1 % vom Masseeintrag.
Abmischung 3: 37,5 g kationischer PVA (DS = 0,016) = 0,5 % vom Masseeintrag.
Abmischung 4: 75,0 g kationischer PVA (DS = 0,016) = 1,0 % vom Masseeintrag.
Abmischung 5: 37,5 g kationisierter PVA (DS = 0,024) = 0,5 % vom Masseeintrag.
Abmischung 6: 75 g kationisierter PVA (DS = 0,024) = 1,0 % vom Masseeintrag

(Masseeintrag = Einsatzmenge Zellstoff + Füllstoff)
Von jeder Abmischung wurden jeweils 8 Blätter hergestellt und getestet. Die Festigkeitsprüfung der vorgetrockneten Blätter erfolgt nach Akklimatisierung bei 47 - 53 % Luftfeuchtigkeit und 21 - 25 °C in einem Klimaraum.

Ergebnisse:

Beim Einsatz von 0,5 und 1 % kationisiertem Polyvinylalkohol als Leimungsmittel ist eine deutliche Verbesserung der Berstfestigkeit zu erkennen (vergleiche Abmischung 1 und 2 mit Abmischung 3 und 6, Tabelle 5). Ein Einfluß des Kationisierungsgrades des Polyvinylalkohols auf die Berstfestigkeit ist nicht eindeutig erkennbar. Auch die ermittelten Reißfestigkeiten lassen lediglich die Tendenz erkennen, daß der Einsatz höher kationisierter Polyvinylalkohole zu keiner Verschlechterung der Reißfestigkeit führt.

Tabelle 5 "Festigkeitsprüfung PVA - geleimter Papiere"

| Abmischung Nr. | PVA - Zusatz | Flächengewicht $\overline{m_A}$ in $g/m^2$ | Bruchwiderstand $\overline{F_B}$ in N | Reißfestigkeit R in km | Berstfestigkeit $\overline{be}$ in kPa $m^2/g$ |
|---|---|---|---|---|---|
| 1 | 0,5 % PVA (unbehandelt) | 79,07 | 17,08 | 1,47 | 0,54 |
| 2 | 1,0 % PVA (unbehandelt) | 77,63 | 15,92 | 1,39 | 0,64 |
| 3 | 0,5 % kat. PVA ( DS 0,016) | 75,59 | 13,1 | 1,18 | 0,65 |
| 4 | 1,0 % kat. PVA ( DS 0,016) | 77,71 | 15,26 | 1,34 | 0,69 |
| 5 | 0,5 % kat. PVA ( DS 0,024) | 75,11 | 14,64 | 1,33 | 0,59 |
| 6 | 1,0 % kat. PVA ( DS 0,024) | 80,48 | 16,56 | 1,40 | 0,68 |

Retentionsversuche:

Mit dem sogenannten Dynamic-Drainage-Jar-Test (DDJ-Test) nach Britt (The original Britt Jar, Paper Research Materials Company, New York (1982), K.W. Britt, J. E. Unbehend: TAPPI 59 (2), 67 (1976) bzw. B.

Abson, D. F. Brooks: TAPPI 68 (1), 76 (1985)) wurde das Retentionsverhalten getestet. Je nach Einsatzmenge wurden zwischen 0,1 und 1 % nativer bzw. kationischer Polyvinylalkohol, bezogen auf den Füll- und Feststoffanteil, als 0,4 %iger Kleister zugesetzt. Die Ergebnisse dieses Tests sind in Tabelle 6 aufgeführt (die angegebenen Werte sind die Mittelwerte aus jeweils drei Versuchen). Wie das Diagramm eindeutig zeigt, kann der Feststoffgehalt im Entwässerungsfiltrat um ca. 85 % verringert werden, wenn 0,3 bis 0,5 % kationisierter PVA dem Papierbrei zugesetzt werden. Die Zugabe von unkationisiertem PVA bewirkt hingegen eine leichte Erhöhung des Festoffgehaltes im Filtrat. Ein deutlicher Einfluß auf die Entwässerungszeit ist beim Einsatz von kationisiertem PVA nicht festzustellen. Damit ist eine Verringerung der Abwasserbelastung beim Papierherstellungsprozeß möglich.

Tabelle 6 : (siehe auch Diagramm Nr.

Ergebnisse der Retentionsversuche

| PVA-Zusatz % | prakt.DS | Entwässerungszeit s/100 ml Filtrat | Filtratrückstand g/100 ml Filtrat | Feststoff % |
|---|---|---|---|---|
| 0,1 | nicht kationisierter PVA | 35,9 | 0,1633 | 100,99 |
| 0,3 | | 36,1 | 0,1678 | 103,77 |
| 0,5 | | 35,9 | 0,1666 | 103,03 |
| 1,0 | | 35,9 | 0,1668 | 103,15 |
| 0,1 | 0,016 | 36,7 | 0,0603 | 37,29 |
| 0,3 | 0,016 | 37,1 | 0,0341 | 21,09 |
| 0,5 | 0,016 | 37,1 | 0,0316 | 19,54 |
| 1,0 | 0,016 | 36,4 | 0,0256 | 15,83 |
| 0,1 | 0,024 | 36,8 | 0,0551 | 34,08 |
| 0,3 | 0,024 | 36,9 | 0,0248 | 15,34 |
| 0,5 | 0,024 | 37,1 | 0,0224 | 13,85 |
| 1,0 | 0,024 | 36,7 | 0,0243 | 15,03 |

Als Bezug dient die Feststoffmenge, die in 100 ml Filtrat enthalten ist, wenn kein PVA - Zusatz

vorgenommen wird ( 0,1617 g ≙ 100 % )
Die eingesetzten kationisierten Polyvinylalkohole stammen aus den Versuchen 17 (0.016) bzw. 20 (0.024) .der Tabelle 3.

Diagramm Nr. 1

Abhängigkeit des Feststoffgehaltes im Entwässerungsfiltrat von der Einsatzmenge des zugesetzten Polyvinylalkohols

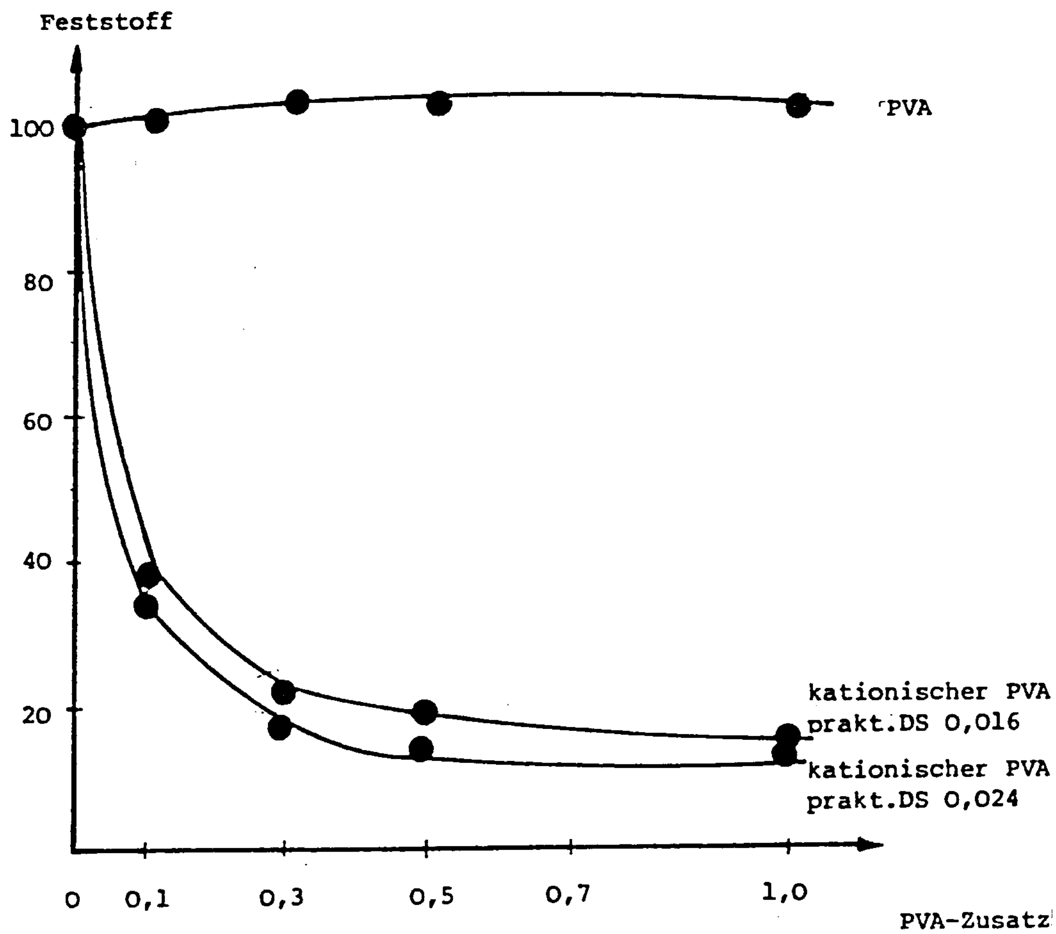


## Patentansprüche

1. Verfahren zur Verätherung von Polyvinylalkoholen (PVA) durch Umsetzung von Alkylidenepoxiden der allgemeinen Formeln

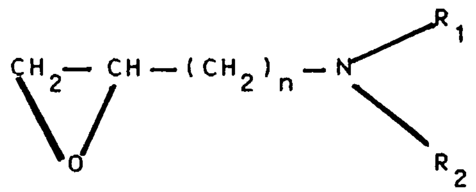

(I)

oder

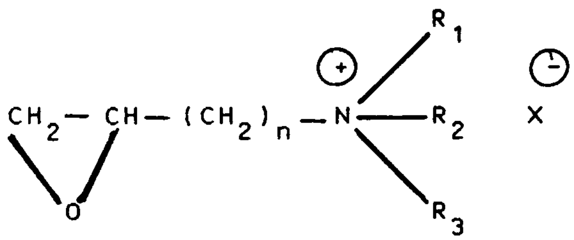

(II)

in denen n = 1, 2 oder 3 ist, $R_1$, $R_2$ und $R_3$ gleiche oder verschiedne Alkylreste mit 1 bis 18 Kohlenstoffatomen oder $R_1$ dem Benzylrest oder $-C_2H_4OH$ entspricht, und $X^-$Chlorid, Bromid, Sulfat oder Acetat bedeuten, oder deren Gemischen mit PVA in alkalischem Medium in Gegenwart von Wasser, dadurch gekennzeichnet, daß die Reaktionsmischung 11 bis 30 Gew.-% Wasser, bezogen auf deren Gesamtmenge, und 1 bis 4 Gew.% eines Alkali- oder Erdalkalihydroxids, bezogen auf die PVA-Menge, enthält.

**2.** Verfahren gemäß Anspruch 1,
dadurch gekennzeichnet, daß man die Umsetzung bei einer Temperatur zwischen 5 und 75 °C durchführt.

**3.** Verfahren gemäß den Ansprüchen 1 bis 2,
dadurch gekennzeichnet, daß man die Reaktionsmischung aus PVA, Alkali- bzw. Erdalkalihydroxid oder -oxid, Wasser und Alkylidenepoxid in einem Intensivmischer innerhalb von 10 Sekunden bis 25 Minuten homogenisiert, dann ausschleust und in dem vorgesehenen Lagerbehältnis ausreagieren läßt.

**4.** Verfahren gemäß den Ansprüche 1 bis 3,
dadurch gekennzeichnet, daß die Reaktionsmischung 0,02 bis 2,0 Gew.-%, bezogen auf die Gesamtmenge, einer feinteiligen hydrophilen und/oder hydrophoben Kieselsäure enthält.

**5.** Verfahren gemäß den Ansprüchen 1 bis 4,
dadurch gekennzeichnet, daß man als Intensivmischer einen Pflugscharmischer benutzt.

**6.** Verfahren gemäß den Ansprüchen 1 bis 5,
dadurch gekennzeichnet, daß mal als Intensivmischer einen Durchflußbefeuchtungsmischer benutzt.

## Claims

**1.** A process for the etherification of polyvinyl alcohols (PVA) by reaction of alkylidene epoxides corresponding to the following general formulae

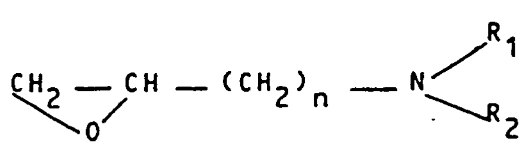

(I)

or

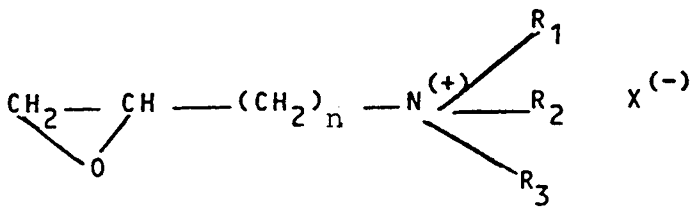 (II)

in which n = 1, 2 or 3, $R_1$, $R_2$ and $R_3$ may be the same or different and represent $C_{1-18}$ alkyl radicals or $R_1$ corresponds to the benzyl radical or $-C_2H_4OH$ and $X^-$ is chloride, bromide, sulfate or acetate, or mixtures thereof with PVA in alkaline medium in the presence of water, characterized in that the reaction mixture contains 11 to 30% by weight water, based on the reaction mixture as a whole, and 1 to 4% by weight of an alkali metal or alkaline earth metal hydroxide, based on PVA.

**2.** A process as claimed in claim 1, characterized in that the reaction is carried out at a temperature of 5 to 75 ° C.

**3.** A process as claimed in claims 1 and 2, characterized in that the reaction mixture of PVA, alkali metal or alkaline earth metal hydroxide or oxide, water and alkylidene epoxide is homogenized for 10 seconds to 25 minutes in an intensive mixer, removed from the mixer and left to react out in the storage container provided.

**4.** A process as claimed in claims 1 to 3, characterized in that the reaction mixture contains 0.02 to 2.0% by weight, based on the reaction mixture as a whole, of a fine-particle hydrophilic and/or hydrophobic silica.

**5.** A process as claimed in claims 1 to 4, characterized in that a ploughshare mixer is used as the intensive mixer.

**6.** A process as claimed in claims 1 to 5, characterized in that a throughflow moistening mixer is used as the intensive mixer.

**Revendications**

**1.** Procédé d'éthérification d'alcools polyvinyliques (PVA) par mise en réaction d'époxydes d'alcoylidène de formules générales :

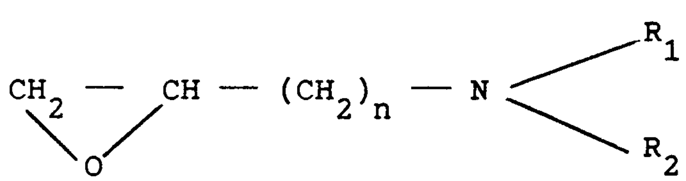 (I)

ou

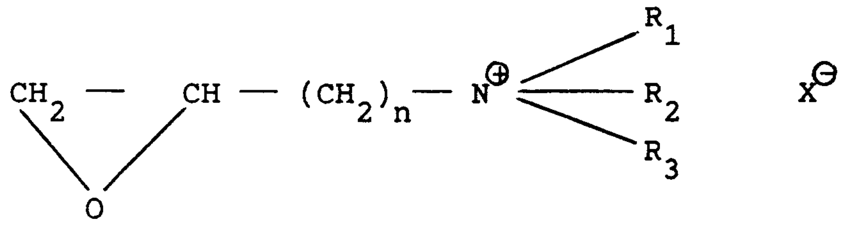 (II)

dans lesquelles n est 1, 2 ou 3 $R_1$, $R_2$ et $R_3$ sont des radicaux alcoyle, identiques ou différents, ayant de 1 à 18 atomes de carbone ou $R_1$ correspond au reste benzyle ou à $C_2H_4OH$ et $X^-$ signifie un chlorure, un bromure, un sulfate ou un acétate, ou leurs mélanges avec PVA en milieu alcalin en présence d'eau, procédé caractérisé en ce que le mélange réactionnel contient de 11 à 30 % en poids d'eau, rapporté à sa quantité totale, et de 1 à 4 % en poids d'un hydroxyde de métal alcalin ou alcalino-terreux rapporté à la quantité de PVA.

**2.** Procédé selon la revendication 1, caractérisé en ce que l'on effectue la réaction à une température comprise entre 5 et 75 ° C.

**3.** Procédé selon les revendications 1 et 2, caractérisé en ce que l'on homogénéise le mélange réactionnel formé de PVA, d'hydroxyde ou d'oxyde de métal alcalin ou alcalino-terreux, d'eau et d'époxyde d'alcoylidène dans un mélangeur intensif pendant 10 secondes à 25 minutes, puis on évacue et on laisse finir de réagir dans le récipient de stockage prévu.

**4.** Procédé selon les revendications 1 à 3, caractérisé en ce que le mélange réactionnel renferme de 0,02 à 2 % en poids, rapporté à la quantité totale d'un acide silicique finement divisé, hydrophile et/ou hydrophobe.

**5.** Procédé selon les revendications 1 à 4, caractérisé en ce que l'on utilise comme mélangeur intensif un mélangeur à soc de charrue.

**6.** Procédé selon les revendications 1 à 5, caractérisé en ce que l'on utilise donc comme mélangeur intensif, un mélangeur à mouillage par traversée.